# EUROPEAN PATENT APPLICATION

(11) **EP 4 420 766 A1**
(43) Date of publication of application: **28.08.2024**
(21) Application number: 23158193.5
(22) Date of filing: 23.02.2023
(51) Int. Cl.: B01D 63/08, H01M 8/04119, B01D 65/08

(54) **FLOW PLATE AND HUMIDIFIER FOR A FUEL CELL SYSTEM**

(71) Applicant: MANN+HUMMEL GmbH, 71636 Ludwigsburg (DE)
(72) Inventor: JAINEK, Herbert, 74074 Heilbronn (DE); WELLER, Benedikt, 71711 Steinheim (DE); TRAUTMANN, Pius, 70499 Stuttgart (DE); FRANK, Michael, 71679 Asperg (DE)
(74) Representative: Mann + Hummel Intellectual Property

(57) **Abstract**

The invention relates to a flow plate (100) for a humidifier (1000), in particular the humidifier (1000) for a fuel cell system, the flow plate (100) comprising a frame (50) and a flow field body (20), the frame (50) surrounding the flow field body (20) being connected or integral with the frame (50). The flow field body (20) has a corrugated surface at least on one side (18), the flow field body (20) comprising a plurality of support elements (30) protruding from a base plane (10) of the flow field body (20) and being arranged in lines and rows (42, 43). The lines of support elements (30) extend in a first direction (16) and the rows (42, 43) of support elements (30) extend in a second direction (26) different from the first direction (16). The support elements (30) in successive lines and rows are arranged offset from each other.

## Description

### Technical Field

The invention relates to a flow plate for a humidifier, in particular a humidifier for a fuel cell system, as well as a humidifier with flow plates.

### Background Art

Humidifiers are used for example to humidify process gas for fuel cells which are operated with molecular hydrogen and/or oxygen or air for electricity generation. The process gases supplied to the fuel cell are for this reason usually set to a desired, stable humidity in a humidifier. A humidifier comprises flow plates which are usually provided with channel structures, wherein the channels adjoin a water transfer medium, typically in the form of a semipermeable layer such as a water-transfer membrane. An assembly usually provides a plurality of flow plates, between which there are arranged water transfer membranes.

For example, on one side of a semipermeable layer a moist gas, e.g. an exhaust gas from the fuel cell, is guided through the channels of an adjacent flow plate, and on the opposite side of the semipermeable layer a dry gas, e.g. fresh air, is passed through channels of a second flow plate. In this case, the moist gas on one side of the semipermeable layer gives off moisture to the semipermeable layer, whereas on the opposite side the semipermeable layer gives off moisture to the dry gas.

WO 2018/055130 A1 discloses a flow plate for a humidifier, and to such a humidifier having a plurality of flow plates and water exchange membranes. Humidifiers of this kind are used in electrochemical systems, among other things. The flow plate has a flow field with a plurality of free-standing support elements, wherein the support elements extend, at least in sections, perpendicular to the flat surface plane of the flow plate. Gas to be humidified or gas giving off moisture flows on the flow field. In the humidifier, the flow plates are arranged in a stack, wherein a membrane composite having at least one water exchange membrane is arranged between each pair of adjacent flow plates in the stack.

### Summary

It is an object of the invention to provide an improved flow plate for a humidifier, in particular a humidifier for a fuel cell system.

Another object is to provide an improved humidifier with such flow plates.

According to an aspect of the invention, the object is achieved by a flow plate for a humidifier, in particular a humidifier for a fuel cell system, comprising a frame, the frame surrounding a flow field body being connected or integral with the frame, wherein the flow field body has a corrugated surface at least on one side, the flow field body comprising a plurality of support elements protruding from a base plane of the flow field body and being arranged in lines and rows, wherein the lines of support elements extend in a first direction and rows of support elements extend in a second direction different from the first direction, wherein the support elements in successive lines and rows are arranged offset from each other.

According to a further aspect of the invention, the further object is achieved by a humidifier with flow plates, wherein flow plates are arranged in a stack plate device and wherein a semipermeable layer composite comprising at least one water exchange membrane is arranged between two adjacent flow plates of the stack plate device each.

Advantageous embodiments are described in the dependent claims, the description and the drawings.

According to an aspect of the invention, a flow plate for a humidifier, in particular a humidifier for a fuel cell system, is proposed, comprising a frame, the frame surrounding a flow field body being connected or integral with the frame. The flow field body has a corrugated surface at least on one side, the flow field body comprising a plurality of support elements protruding from a base plane of the flow field body and being arranged in lines and rows. The lines of support elements extend in a first direction and rows of support elements extend in a second direction different from the first direction. The support elements in successive lines and rows are arranged offset from each other.

Humidifiers for the operation of a fuel cell system essentially consist of several flow plates which accommodate a semipermeable layer, such as a semipermeable membrane. This membrane is circumferentially sealed by frames of neighboring flow plates. The flow plates are sealed tightly to each other on the outside. Supply air and exhaust gas, respectively, flows on the two sides of the membrane with the effect that moisture (H2O) is exchanged to a certain extent via the membrane medium. The supply air can be humidified by moisture from the exhaust gas through the semipermeable layer.

The flow plates can be formed from plastic, for example PA6.6 (polyamide), PPA (polyphtalamide), PPS (polyphenylene sulfide), or TPX (polymethylpentene). Alternatively, the flow plates can be formed of sheet metal, for example stainless steel.

The arrangement of the support elements in lines and rows may be in a matrix-like manner.

The semipermeable layer thus separates the exhaust gas flow channel from the supply air flow channel. The semipermeable layer can be designed, for example, as a PFSA (perfluorosulfonic acid) membrane. Such membranes are also commonly used as proton exchange membranes. The membrane is airtight but permeable to moisture.

The pressure levels of the wet exhaust gas and the dry supply air on the different sides of the membrane are different. To optimize the efficiency of the moisture exchange and at the same time to support the membranes against the pressure difference, the interstices between neighboring membranes can be filled with spacer elements. The design of the air flow guiding and supporting geometry may advantageously be designed according to the case of application and requirements. In general, the more intensively the air flow is directed against the membrane, the better is the water transfer. However, the resulting pressure loss in the flow channel reacts proportional. This pressure loss may not exceed a certain level as pressure loss is synonymous with the power to be provided. Therefore, with regard to support geometries, a compromise between a support area to avoid buckling of the membrane with narrow gaps, which means pressure loss, and an open flow area may advantageously be chosen.

The air flow funnels can be integrally molded as part of the frame or inserted separately as inserts. The designs can be different on the dry air side and on the wet air side. Since the higher pressure level prevails on the dry air side, the support elements may also be provided only on the wet air side. An air flow deflection geometry always appears to be advantageous.

The first and the second direction may be oriented perpendicularly according to outer edges of the flow plate. Yet, other orientations, where the two directions are somehow oblique to each other are possible.

Advantageously a higher efficiency of the moisture transfer process may be achieved with flow plates according to the invention. A cost reduction may especially be achieved when the flow plates are manufactured as one-piece from the tub manufacturing process. Thus, favorably, additional assembly of the flow plates may be avoided. Individually matched geometries may also favorably be achieved by such flow plates.

According to a favorable embodiment of the flow plate, the support elements may be protruding, at least in sections, at an angle of less than 90 degrees against the base plane in at least one of the first and second directions. Thus, an advantageous guiding of the fluid flow directed to the membrane may be achieved enhancing the moisture transfer process and on the same time supporting the membrane against the fluid pressure.

According to a favorable embodiment of the flow plate, the support elements may be shaped hook-like. In particular, the free end of the support element may be bent towards the base plane, relative to a plumb line direction oriented perpendicularly to the base plane. Advantageously the contact area of the support elements to the membrane may be optimized for a long lifetime.

According to a favorable embodiment of the flow plate, the support elements may be arranged at periodic distances from one another. This may optimize the fluid flow pattern in order to achieve an advantageous moisture transfer.

According to a favorable embodiment of the flow plate, bent free ends of support elements in one row and in a neighboring next row may be oriented facing each other. Thus, supporting the membrane by the support elements may be optimized. Particularly the support area may thus be locally enlarged.

According to a favorable embodiment of the flow plate, the support elements in the same row may be bent in a first direction and the support elements in an adjacent row may be bent in a direction opposing the first direction. Alternatively, the support elements arranged in the same line may be bent in a first direction and the support elements in an adjacent next line may be bent in a direction opposing the first direction. Advantageously, the manufacturing process for the flow plates may be optimized by such a design.

According to a favorable embodiment of the flow plate, the support elements may be formed in a honeycomb-like shape. In particular, the support elements may be segments of adjacent hexagon-like structures. This further embodiment realizes a different design of a flow field body with a plurality of openings through the flow plate. The honeycomb shaped support elements are arranged not totally flat in the base plane of the flow plate, but are configured with parts of the structure extending from the plane on one side of the flow plate and other parts extending on the other side. Thus an advantageous guiding of the fluid flow directed to the membrane may be achieved enhancing the moisture transfer process and on the same time supporting the membrane against the fluid pressure.

According to a favorable embodiment of the flow plate, the support elements may be formed as parallel longitudinal embossments oriented at least partly along the first and/or the second direction, having at least partly breakthroughs through the embossments in a direction oblique to an extension of the protrusions. Thus, supporting the membrane by the support elements may be optimized by long embossments. Particularly the support area may thus be locally enlarged. By the same time an advantageous guiding of the fluid flow directed to the membrane may be achieved enhancing the moisture transfer process.

According to a favorable embodiment of the flow plate, an inlay part to the circumferential frame may be provided, wherein the support elements are part of the inlay part. Thus, a flexible design of the flow field body may be combined with a cost efficient manufacturing process. The inlay part can easily be modified or exchanged when other support elements should be used for a specific flow plate and humidifier design with altered fluid flow conditions.

According to a favorable embodiment of the flow plate, support elements may be arranged on both opposing sides of the base plane. By this way, a stable support of the membrane against different pressure conditions of the fluid flows may be achieved.

According to a favorable embodiment of the flow plate, the support elements on one side of the base plane may be different from the support elements on the other side. In particular, the support elements on one side of the base plane may differ in height above the base plane and/or in shape and/or orientation in the base plane from the support elements on the other side. This may account for the different boundary conditions of the supply air and the exhaust gas, since the higher pressure level prevails on the dry supply air side.

According to a favorable embodiment, the flow plate may comprise through-holes adjacent to the support elements. In particular, the through-holes may correspond in area and shape to dimensions of the support elements. The through-holes may exist due to the manufacturing process of the support elements, e.g., the support elements may be stamped out of the base plane, thus leaving through-holes in the base plane. Advantageously, the through-holes may also contribute to an advantageous fluid flow guiding of the flow field body.

According to a favorable embodiment of the flow plate, first through-openings extended parallel to the front ends may be arranged in the base plane for feeding the first fluid to the at least one flow field body and opposing second through-openings extended parallel to the longitudinal ends may be arranged for feeding the second fluid to the at least one flow field body of an adjacent flow plate, when in an intentional use the flow plates are stacked in a stack plate device. Thus, the first fluid, e.g. the exhaust gas, and the second fluid, e.g. the supply air, may advantageously be fed in flow channels through the stacked flow plates and may be branched to the flow field bodies of the different flow plates.

According to an aspect of the invention, a humidifier, in particular for a fuel cell system, with flow plates may be proposed, wherein flow plates are arranged in a stack plate device and wherein a semipermeable layer composite comprising at least one water exchange membrane is arranged between two adjacent flow plates of the stack plate device each.

The humidifier represents a flat membrane humidifier. A first, moist or water-rich fluid, for example exhaust gas from fuel cells, flows in one group of flow channels, while a second, dry fluid, for example supply air for the fuel cells, flows in another group of flow channels. The second dry fluid can be moistened by the first fluid via the semipermeable membranes.

The stacked flow plates may be axially floatingly sealed as a stack plate device and may be sealed in the housing via two axially acting seals located respectively at the ends of the housing comprising the inlet side and outlet side of the first and second fluid.

The housing of the humidifier can be made of metal, for example aluminum. Alternatively, it is also possible that the housing is made of plastics, for example PPS, PPA (polyphtalamide), PA (polyamide).

The housing can be made in two housing parts with the fluid inlets and outlets where the stack plate device is located and sealed in between the housing parts.

### Brief Description of Drawings

The present invention together with the above-mentioned and other objects and advantages may best be understood from the following detailed description of the embodiments, but not restricted to the embodiments, wherein is shown in:
Figure 1 is a flow plate for a humidifier, in particular a humidifier for a fuel cell system, according to an embodiment of the invention, in an isometric view from a first side;
Figure 2 is a magnified section W of the flow plate according to Figure 1;
Figure 3 is the flow plate according to Figure 1 from a second side;
Figure 4 is a magnified section Y of the view of the flow plate according to Figure 3;
Figure 5 is a flow plate according to a further embodiment of the invention, in an isometric view;
Figure 6 is a magnified section Z of the flow plate according to Figure 5;
Figure 7 is a flow plate according to a further embodiment of the invention, in an isometric view;
Figure 8 is a magnified section Z of the flow plate according to Figure 7;
Figure 9 is a top view of the flow plate according to Figure 7;
Figure 10 is a magnified cut view along the line G-G according to Figure 9 through three stacked flow plates;
Figure 11 is a humidifier, in particular for a fuel cell system, according to an embodiment of the invention, in an isometric view; and
Figure 12 is a cut view of the humidifier according to Figure 11.

### Detailed Description

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

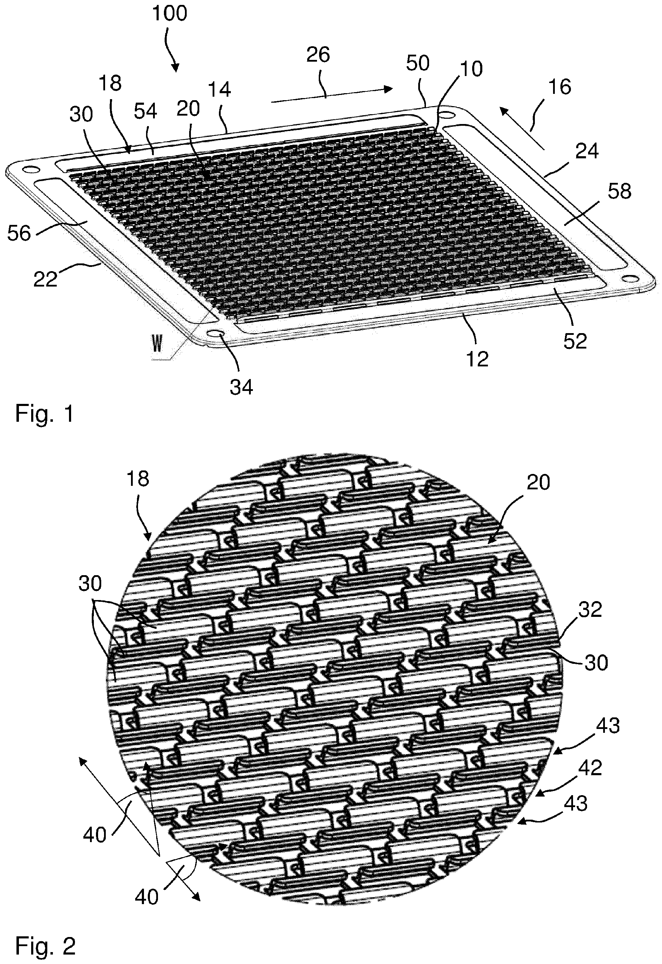

Figure 1 depicts a flow plate 100 for a humidifier 1000, in particular a humidifier 1000 for a fuel cell system, according to an embodiment of the invention, in an isometric view from a first side 18, whereas in Figure 2 a magnified section W of the flow plate 100 according to Figure 1 is depicted.

The flow plate 100 comprises a frame 50. The frame 50 surrounds a flow field body 20 which is connected or integral with the frame 50. The flow field body 20 comprises a base plane 10 as a structure element.

The flow field body 20 serves for guiding a first fluid 60, e.g. an exhaust gas of the fuel cell system, on one of the first or second sides 28, 28 of the flow plate 100 along the base plane 10 of the flow plate 100.

The flow field body 20 has a corrugated surface at least on one side 18, thus providing a plurality of support elements 30 protruding from the base plane 10 of the flow field body 20. The support elements 30 are arranged in a matrix-like manner in lines and rows 42, 43. The lines of support elements 30 extend in a first direction 16 and rows 42, 43 of support elements 30 extend in a second direction 26 perpendicular to the first direction 16. The first and the second direction 16, 26 in Figure 1 correspond to edges of the flow plate 100, but it may also be advantageous, that the first and the second direction 16, 26 are oriented in a different way. Yet, other orientations, where the two directions 16, 26 are somehow oblique oriented to each other may also be possible and could be advantageous under certain requirements.

Advantageously the support elements 30 in successive lines and rows are arranged offset from each other. The support elements 30 protrude from at least one of the first and second side 18, 28 of the base plate 10.

The flow plate 100 comprises opposing front ends 12, 14 along the first direction 16 and opposing longitudinal ends 22, 24 along the second direction 26.

First through-openings 52, 54 extended parallel to the front ends 12, 14 are arranged in the base plane 10 for feeding the first fluid 60 to the at least one flow field body 20 and opposing second through-openings 56, 58 extended parallel to the longitudinal ends 22, 24 are arranged for feeding the second fluid 62 to the at least one flow field body 20 of an adjacent flow plate 100, when in an intentional use the flow plates 100 are stacked in a stack plate device 400. The first fluid 60 and the second fluid 62 by this way may be guided to different sides 18, 28 of the base plate 10.

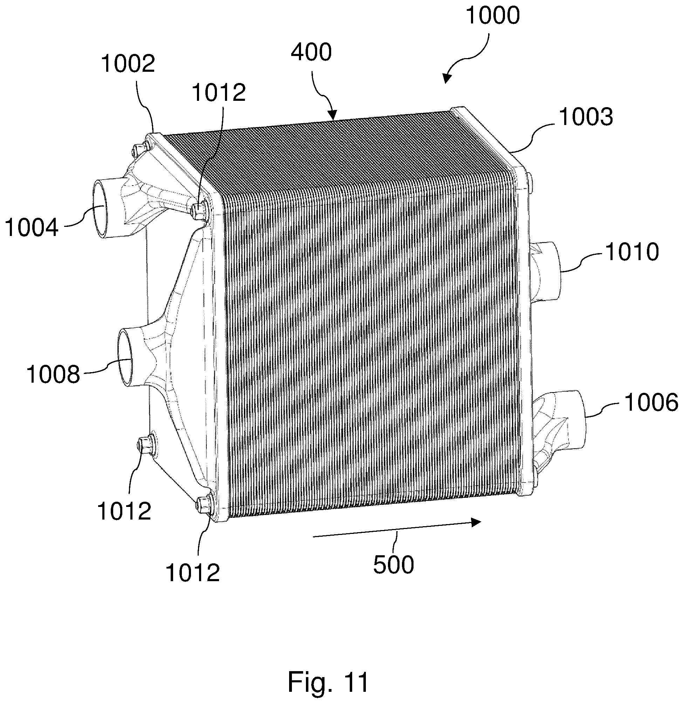

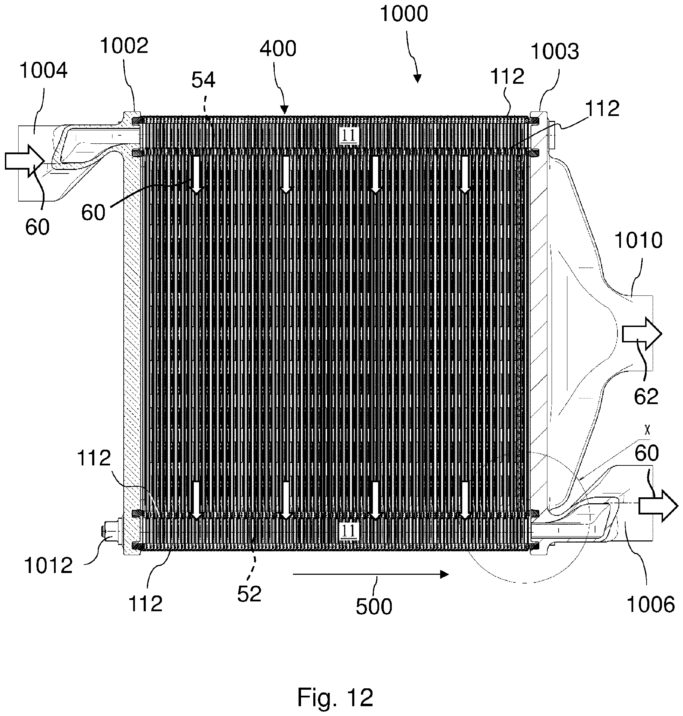

Openings 34 are arranged in all four corners of the flow plate 100 for feeding through a tie-rod 1012 when stacking the flow plates 100 to a stack plate device 400, as is to be seen in Figures 11, 12.

As particularly may be seen from Figure 2, the support elements 30 are protruding at an angle 40 close to, but less than 90 degrees against the base plane 10 in at least one of the first and second directions 16, 26. The angle 40 is sketched in Figure 2 for support elements 30 of two neighboring rows 42, 43.

The support elements 30 are shaped hook-like, in particular, wherein the free end 32 of the support element 30 is bent towards the base plane 10, relative to a plumb line direction oriented perpendicularly to the base plane 10.

As may also be seen, the support elements 30 are arranged at periodic distances from one another. In the embodiment shown in Figure 2, bent free ends 32 of support elements 30 in one row 42 and in a neighboring next row 43 are oriented facing each other. The support elements 30 in the same row 42 are bent in a first direction and the support elements 30 in an adjacent row 43 are bent in a direction opposing the first direction. Alternately, the support elements 30 arranged in the same line could be bent in a first direction and the support elements 30 in an adjacent next line are bent in a direction opposing the first direction.

Thus an advantageous guiding of the fluid flow directed to the membrane 110 may be achieved enhancing the moisture transfer process and on the same time supporting the membrane 110 against the fluid pressure.

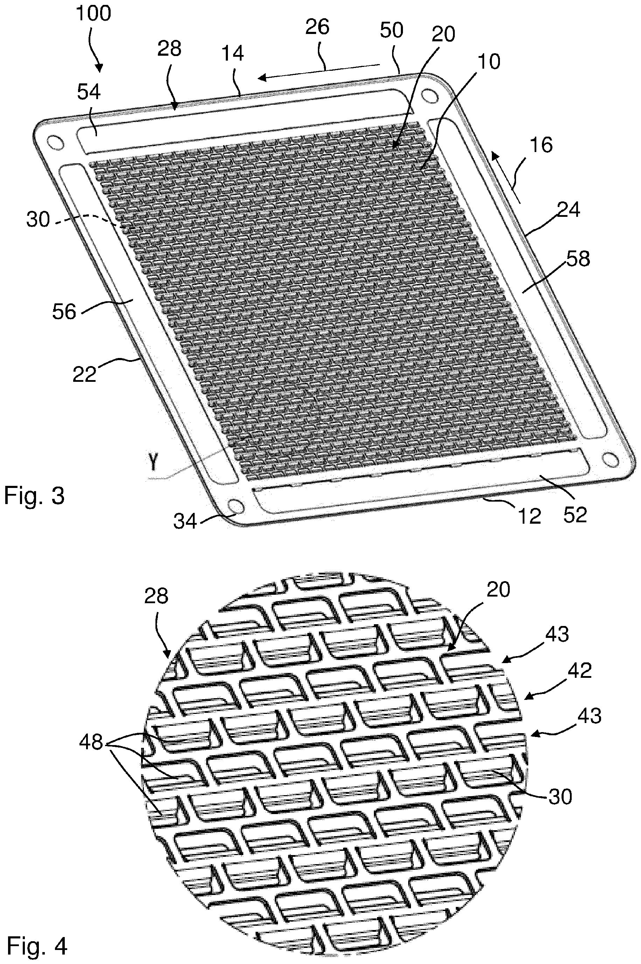

Figure 3 depicts the flow plate 100 according to Figure 1 from the second side 28, whereas in Figure 4 a magnified section Y of the view of the flow plate 100 according to Figure 3 is depicted.

Particularly in Figure 4, details of the support elements 30 are to be seen from their backside. Through-holes 48 adjacent to the support elements 30 may be recognized. The through-holes 48 may exist due to the manufacturing process of the support elements 30, e.g., the support elements 30 may be stamped out of the base plane 10, thus leaving through-holes 48 in the base plane 10. Advantageously, the through-holes 48 may also contribute to an advantageous fluid flow guiding of the flow field body 20. In particular, the through-holes 48 correspond in area and shape to dimensions of the support elements 30.

The flow field body 20 with the support elements 30 may be connected or integral with the frame 50, according to manufacturing requirements. The flow field body 20 could be made in an injection molding process with some plastic material together with the frame 50 as one part which offers a relatively cost efficient manufacturing process.

Alternatively, an inlay part to the circumferential frame 50 may be provided, wherein the support elements 30 are part of the inlay part. Thus, a flexible design of the flow field body 20 may be combined with a cost efficient manufacturing process. The inlay part can easily be modified or exchanged when other support elements 30 should be used for a specific flow plate 100 and humidifier design with altered fluid flow conditions.

Support elements 30 may advantageously be arranged on one side 18, 28 of the base plane 10 as well as on both opposing sides 18, 28, according to the fluid flow conditions to be required. The support elements 30 on one side 18, 28 of the base plane 10 may be different from the support elements 30 on the other side 18, 28. In particular, the support elements 30 on one side 18, 28 of the base plane 10 may differ in height above the base plane 10 and/or in shape and/or orientation in the base plane 10 from the support elements 30 on the other side 18, 28.

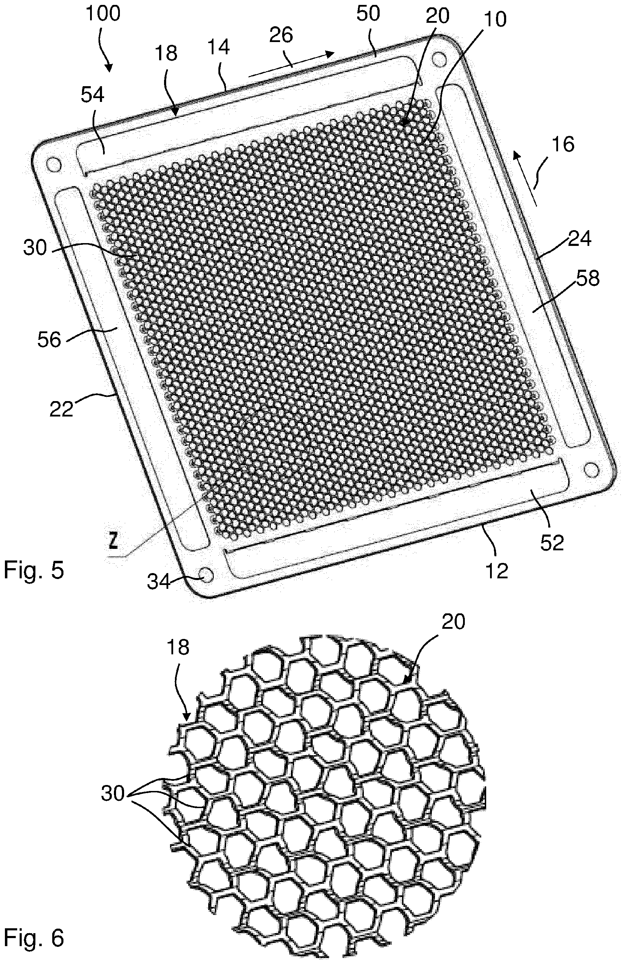

In Figure 5 a flow plate 100 according to a further embodiment of the invention is depicted, in an isometric view, whereas in Figure 6 a magnified section Z of the flow plate 100 according to Figure 5 is shown.

In this embodiment, the support elements 30 are formed in a honeycomb-like shape. In particular, which may be seen in Figure 6, the support elements 30 are segments of adjacent hexagon-like structures.

The honeycomb shaped support elements 30 are arranged not totally flat in the base plane 10 of the flow plate 100, but are configured with parts of the structure extending from the base plane 10 on one side 18 of the flow plate 100 and other parts extending on the other side 28.

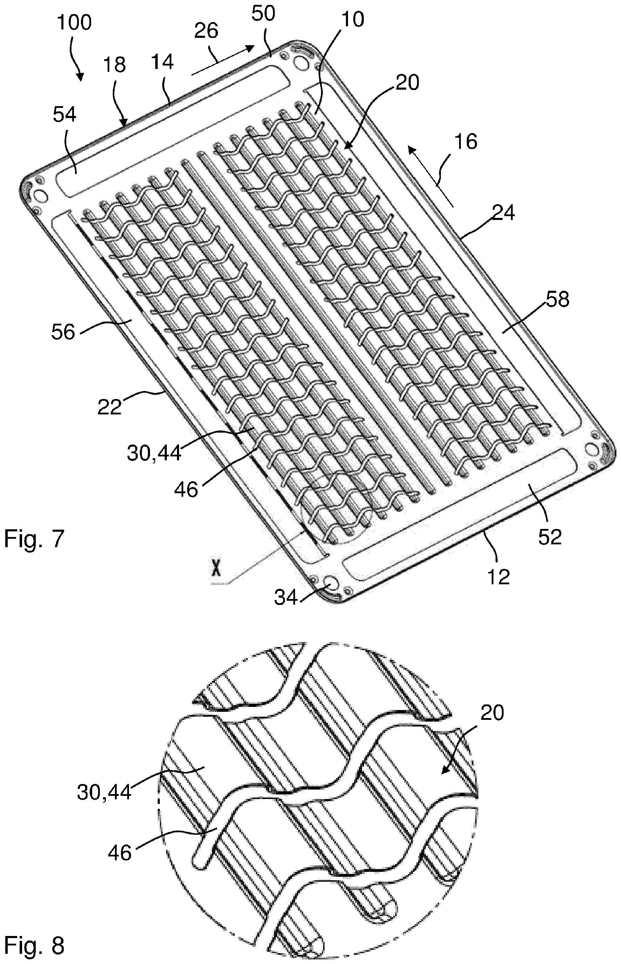

Figure 7 depicts a flow plate 100 according to a further embodiment of the invention, in an isometric view, whereas in Figure 8 a magnified section Z of the flow plate 100 according to Figure 7 is depicted.

In this embodiment, the support elements 30 are formed as parallel longitudinal embossments 44 oriented at least partly along the first and/or the second direction 16, 26. The support elements 30 have at least partly breakthroughs 46 through the embossments 44 in a direction oblique to an extension of the protrusions 44. The breakthroughs 46 may be shaped waveform-like.

As may be seen from Figure 7, the embossments 44 may protrude in a first region, e.g. in the lower part of the flow plate 100, referring to the viewing plane, to the first side 18 of the flow plate 100 and in a second region, e.g. the upper part of the flow plate 100 to the second side 28, which means the embossments 44 are realized as depressions in the first side 18. In between the two parts there may be a continuous transition in the embossments 44.

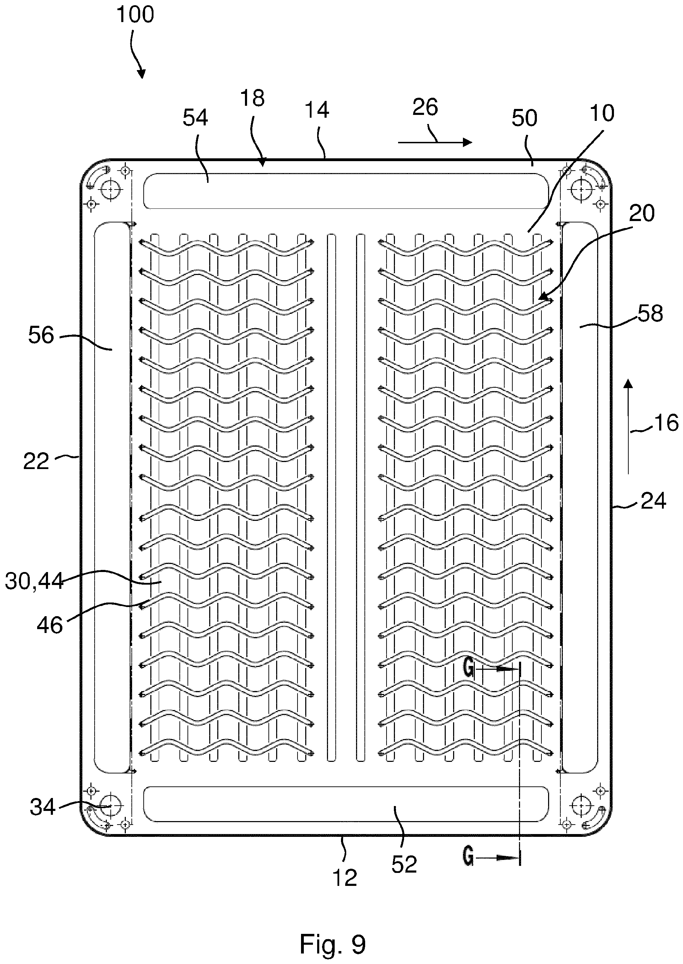

In Figure 9 a top view of the flow plate 100 according to Figure 7 is depicted, with a cutting line G-G for a cut view through part of an embossment 44.

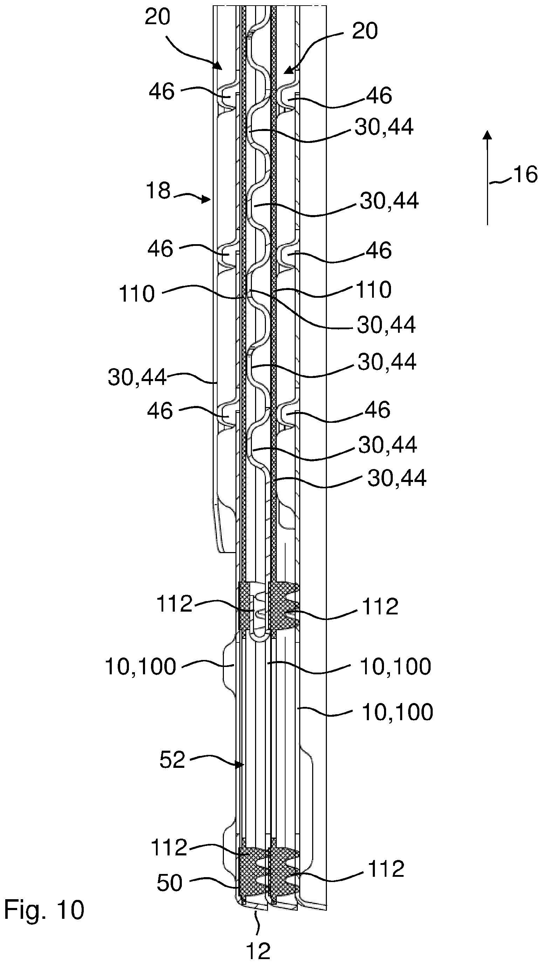

Figure 10 depicts the magnified cut view along the line G-G according to Figure 9 through three stacked flow plates 100.

The three flow plates 100 are stacked atop of each other with semipermeable membranes 110 stacked between the flow plates 100. The embossments 44 of the three flow plates 100 are alternately oriented in different directions 16, 26. The embossments 44 of the uppermost and the lowermost flow plate 100 are oriented in the first direction 16, whereas the embossments 44 of the middle flow plate 100 are oriented transversely hereto in the second direction 26, as may be recognized from the cut view. The semipermeable membrane 110 is pressed by the embossments 44 of one flow plate 100 against the second side 28 of the neighboring flow plate 100 atop of the first flow plate 100.

Gaskets 112 are arranged between the flow plates 100 in order to seal the through-openings 52, 54 (in Figure 10 the first through-openings 52 are visible).

Figure 11 depicts a humidifier 1000, in particular for a fuel cell system, according to an embodiment of the invention, in an isometric view, whereas Figure 12 depicts a cut view of the humidifier 100 according to Figure 11.

The humidifier 1000 comprises flow plates 100, which are arranged in a stack plate device 400 in a stacking direction 500, as marked in the Figures. In the stack plate device 400, a semipermeable layer composite 110 comprising at least one water exchange membrane 110 is arranged between two adjacent flow plates 100 of the stack plate device 400 each.

The stack plate device 400 is enclosed on both ends with housing parts 1002, 1003.

Fluid inlets 1004, 1008 for the first and the second fluid 60, 62 are integrated in the first housing part 1002, whereas fluid outlets 1006, 1010 are integrated in the second housing part 1003.

Stack plate device 400 and housing parts 1002, 1003 are fixed by four tie rods 1012, mounted through openings 34 in the corners of the flow plates 100.

In the cut view in Figure 12 the flow of the first fluid 60 from the inlet 1004 through the flow plates 100 to the outlet 1006 is marked by arrows. The outlet 1010 is also to be seen as a projection, because it does not lie in the cutting plane.

Gaskets 112 for sealing the first through-openings 52, 54 are also to be seen in the cut view.

### Reference Numbers

10 base plane
12 front end
14 front end
16 first direction
18 first side
20 flow field body
22 longitudinal end
24 longitudinal end
26 second direction
28 second side
30 support element
32 hook-like end
34 opening
40 angle
42 row
43 row
44 embossment
46 breakthrough
48 through-hole
50 frame
52 first through-opening
54 first through-opening
56 second through-opening
58 second through-opening
60 first fluid (exhaust gas)
62 second fluid (supply air)
100 flow plate
110 semipermeable layer
112 gasket
400 stack plate device
500 stacking direction
1000 humidifier
1002 housing part
1003 housing part
1004 inlet first fluid
1006 outlet first fluid
1008 inlet second fluid
1010 outlet second fluid
1012 tie rod

## Claims

1. A flow plate (100) for a humidifier (1000), in particular the humidifier (1000) for a fuel cell system, the flow plate (100) comprising:
a frame (50); and
a flow field body (20), the frame (50) surrounding the flow field body (20) being connected or integral with the frame (50),
wherein the flow field body (20) has a corrugated surface at least on one side (18), the flow field body (20) comprising a plurality of support elements (30) protruding from a base plane (10) of the flow field body (20) and being arranged in lines and rows (42, 43), the lines of the support elements (30) extending in a first direction (16) and the rows (42, 43) of the support elements (30) extending in a second direction (26) different from the first direction (16), and
wherein the support elements (30) in successive lines and rows are arranged offset from each other.

2. The flow plate according to claim 1, wherein the support elements (30) are protruding, at least in sections, at an angle (40) of less than 90 degrees against the base plane (10) in at least one of the first and second directions (16, 26).

3. The flow plate according to claim 1 or 2, wherein the support elements (30) are shaped hook-like, in particular, wherein a free end (32) of the support element (30) is bent towards the base plane (10), relative to a plumb line direction oriented perpendicularly to the base plane (10).

4. The flow plate according to any one of the preceding claims, wherein the support elements (30) are arranged at periodic distances from one another.

5. The flow plate according to any one of the preceding claims, wherein bent free ends (32) of the support elements (30) in one row (42) and in a neighboring next row (43) are oriented facing each other.

6. The flow plate according to any one of the claims 4 or 5, wherein the support elements (30) in the same row (42) are bent in a first direction, and the support elements (30) in an adjacent row (43) are bent in a direction opposing the first direction, or
wherein the support elements (30) arranged in the same line are bent in a first direction, and the support elements (30) in an adjacent next line are bent in a direction opposing the first direction.

7. The flow plate according to claim 1, wherein the support elements (30) are formed in a honeycomb-like shape, in particular, wherein the support elements (30) are segments of adjacent hexagon-like structures.

8. The flow plate according to claim 1, wherein the support elements (30) are formed as parallel longitudinal embossments (44) oriented at least partly along the first and/or the second direction (16, 26), and having at least partly breakthroughs (46) through the embossments (44) in a direction oblique to an extension of the embossments (44).

9. The flow plate according to any one of the preceding claims, wherein an inlay part to the circumferential frame (50) is provided, and
wherein the support elements (30) are part of the inlay part.

10. The flow plate according to any one of the preceding claims, wherein the support elements (30) are arranged on both opposing sides (18, 28) of the base plane (10).

11. The flow plate according to claim 10, wherein the support elements (30) on one side (18, 28) of the base plane (10) are different from the support elements (30) on the other side (18, 28), in particular, wherein the support elements (30) on one side (18, 28) of the base plane (10) differ in height above the base plane (10) and/or in shape and/or in orientation in the base plane (10) from the support elements (30) on the other side (18, 28).

12. The flow plate according to any one of the preceding claims, further comprising through-holes (48) adjacent to the support elements (30), in particular, wherein the through-holes (48) correspond in area and shape to dimensions of the support elements (30).

13. The flow plate according to any one of the preceding claims, wherein first through-openings (52, 54) extended parallel to front ends (12, 14) are arranged in the base plane (10) for feeding a first fluid (60) to the at least one flow field body (20) and opposing second through-openings (56, 58) extended parallel to longitudinal ends (22, 24) are arranged for feeding a second fluid (62) to the at least one flow field body (20) of an adjacent flow plate (100), when the flow plates (100) are stacked in a stack plate device (400).

14. A humidifier (1000), in particular for a fuel cell system, the humidifier (1000) comprising flow plates (100) according to any one of the preceding claims,
wherein the flow plates (100) are arranged in a stack plate device (400), and
wherein a semipermeable layer composite (110) comprising at least one water exchange membrane (110) is arranged between each pair of the adjacent flow plates (100) of the stack plate device (400).
